# EUROPEAN PATENT SPECIFICATION

(11) **EP 0 858 917 B1**
(45) Date of publication and mention of the grant of the patent: **09.07.2003**
(21) Application number: 98301014.1
(22) Date of filing: 12.02.1998
(51) Int. Cl.: B60C 11/11, B60C 11/13, B60C 11/04, B60C 11/12

(54) **Pneumatic tyre**
Luftreifen
Bandage pneumatique

(30) Priority: 13.02.1997 JP 2896097
(43) Date of publication of application: 19.08.1998
(73) Proprietor: SUMITOMO RUBBER INDUSTRIES LIMITED, Kobe-shi, Hyogo-ken (JP)
(72) Inventor: Iwamura, Wako, Kobe-shi, Hyogo-ken (JP)
(74) Representative: Stewart, Charles Geoffrey

(56) References cited:
- EP-A- 0 547 019
- US-A- 5 293 918
- PATENT ABSTRACTS OF JAPAN vol. 009, no. 191 (M-402), 7 August 1985 (1985-08-07) -& JP 60 056605 A (YOKOHAMA GOMU KK), 2 April 1985 (1985-04-02)
- PATENT ABSTRACTS OF JAPAN vol. 015, no. 021 (M-1070), 17 January 1991 (1991-01-17) -& JP 02 267007 A (BRIDGESTONE CORP), 31 October 1990 (1990-10-31)

## Description

The present invention relates to a pneumatic tyre having a tread portion with fine grooves for preventing bareness of rubber.

In the tyres vulcanised in a mould, and in particular for tyres which have a block type tread pattern, the so called bareness of tread rubber is liable to occur when air between the tyre and mould is not fully removed and the rubber does not fully fill the mould cavities.

To prevent this occurrence of bareness of rubber, a mould with a large number of vent holes, a vacuum mould, or a segmental mould is usually used. If a large number of vent holes are utilised, a large number of spues or pips of rubber are inevitably formed in the tread portion of the tyre. Thus the appearance is bad and it is necessary to cut off the spues. However, to do this without injuring the tread surface is a difficult and time-consuming task. If vacuum moulds or segmental moulds are used, then due to the high mould costs, the tyre production cost becomes high.

It has been proposed in EP-A-0 547 019 to provide fine grooves having a depth and width both of 1 mm or less across the surface of blocks forming the tread but only to provide improved wet, ice and snow grip properties of a winter tyre.

It is an object of the present invention to provide a pneumatic tyre in which the occurrence of bareness of rubber is effectively and economically prevented without deteriorating the tyre appearance and tyre performance such as road grip and the like.

Accordingly the present invention provides a pneumatic tyre as set out in claim 1 to meet the above objective. Further aspects of the invention are set out in claims 2 to 5.

The fine grooves effectively collect and vent the air from the mould cavity. As a result, the number of vent holes needed in the mould can be decreased.

Embodiments of the present invention will now be described, by way of example only, in detail in conjunction with the accompanying drawings in which:
Fig.1 is a cross sectional view of an embodiment of the present invention;
Fig.2 is a plan view thereof showing an example of the tread pattern;
Fig.3 is a cross sectional view for explaining the function of small ribs forming fine grooves; and
Fig.4 is a cross sectional view showing a slope formed on the angularly narrowest corner of a tread block.

The pneumatic tyre 1 according to the present invention comprises a tread portion 12, a pair of sidewall portions 13, a pair of bead portions 14 each with a bead core 15 therein, a toroidal carcass 16 extending between the bead portions 14 and a belt 17 disposed radially outside the carcass 16 and inside the tread portion 12.

The carcass 16 is composed of at least one ply, in this example two plies of cords arranged radially at an angle of 75 to 90 degrees with respect to the tyre equator C, extending between the bead portions 14 and turned up around each bead core 15 from the inside to the outside of the tyre to form turnup portions 16A and a main portion therebetween. In this example, the turnup portions 16A of the inner carcass ply extend up to the vicinity of the maximum width point of the tyre. Thus the inner carcass ply has a so-called high turn-up structure. For the carcass cords, organic fibre cords, e.g. nylon, polyester, rayon and the like are used. Between the carcass turnup portion and main portion in each bead portion 14, a rubber bead apex 18 is disposed extending radially outwardly from the bead core 15.

The belt 17 is composed of a single ply of at least one cord wound spirally at a small angle of 0 to 5 degrees to the tyre equator C. For the belt cords, low modulus cords such as nylon and the like are used.

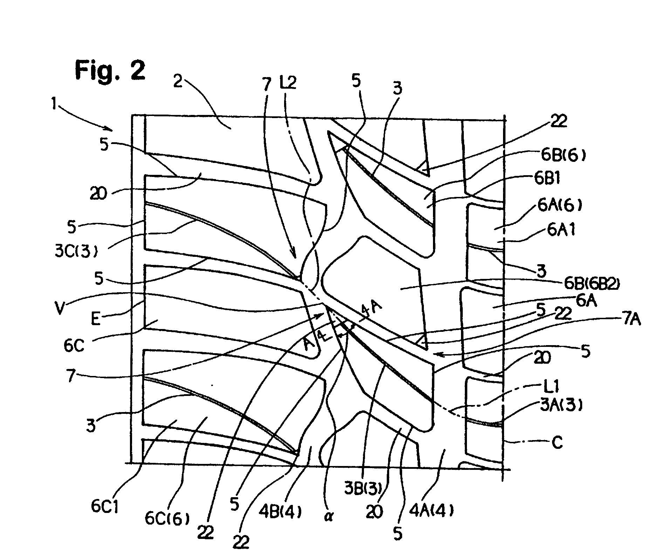

Fig.2 shows the left half of the tread portion 12, and in this example, the right half is symmetrical about the tyre equator C.

The tread portion 12 is provided with longitudinal grooves 4 extending continuously in the circumferential direction.

The longitudinal grooves 4 comprise a pair of axially inner longitudinal grooves 4A disposed one on each side of the tyre equator C, and a pair of axially outer longitudinal grooves 4B disposed axially outside of the longitudinal grooves 4A. The inner longitudinal grooves 4A are substantially straight, but the outer longitudinal grooves 4B are zigzag. The longitudinal grooves 4 have a width of 5 to 20 mm at the tread surface, and a depth of 6 to 15 mm.

The tread portion 12 is further provided with axial grooves 20 extending across the tyre between the tread edges E. All the axial grooves 20 in this example extend continuously from one of the tread edges E to the other describing a gentle curved line like a V-shape. The axial grooves 4 have a width of 2 to 8 mm at the tread surface.

By the longitudinal grooves 4 and axial grooves 20, the tread portion 12 is divided into circumferential rows of blocks 6. In this embodiment, therefore, the blocks 6 comprise blocks 6A between the longitudinal grooves 4A, blocks 6B between the longitudinal grooves 4A and 4B, and blocks 6C between the longitudinal grooves 4B and the tread edges E.

The blocks 6 are provided with fine grooves 3. As shown in Fig.2, every other one (6A1, 6B1, 6C1) of the blocks (6A, 6B, 6C) in each row is provided with a fine groove 3 (3A, 3B, 3C).

The fine groove 3A provided on each of the blocks 6A1 extends from one of the longitudinal grooves 4A to the other in an arc and opens thereto.

The fine groove 3B provided on each of the blocks 6B1 extends from the angularly narrowest corner 7 of the block to a block edge 5 other than the two block edges 5 between which the narrowest corner 7 is formed. The fine groove 3B in this example extends to the longitudinal groove 4A from the corner between the longitudinal groove 4B and an axial groove 20, and therefore, the fine groove 3B opens to both the longitudinal grooves 4A and 4B.

The fine groove 3C provided on each of the blocks 6C1 extends from the angularly narrowest corner 7 of the block adjacent to the longitudinal groove 4B to the axially outer edge of the block, that is, the tread edge E. Therefore, the fine groove 3C opens to the longitudinal grooves 4B and the tread edge E.

The fine groove 3B is configured to connect with an extended line L1 of the above-mentioned fine grooves 3A, and the fine groove 3C is configured to connect with an extended line L2 of the fine grooves 3B so that a series of the fine grooves 3A, 3B and 3C describe across the tyre tread a gentle curved line like a V-shape which extend from one of the tread edges E to the other similarly to the axial grooves 20.

Preferably, both the ends of the fine groove 3 open at block edges. However, it is possible one or both of the ends terminate in the block. In such a case, the distance of the terminated end from the adjacent block edge is set in the range of from 3 to 8 mm, whereby a crack or tear starting from the terminated end can be prevented.

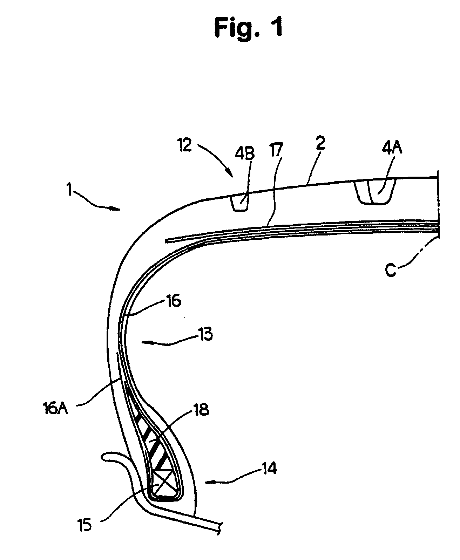

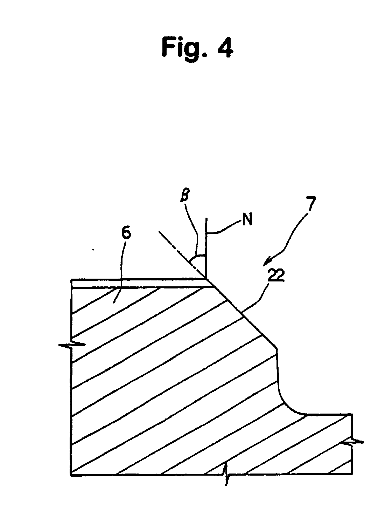

As shown in Fig.1 and 4, the angularly narrowest corners 7 of the blocks 6B and 6C are provided with a slope 22 having an angle βÀ of 30 to 60 degrees to the normal direction N to the tread surface, whereby the occurrence of bareness or lack of rubber in the corner 7 is completely prevented.

In the blocks provided with a fine groove, even if the slope 22 is not provided, the occurrence of bareness of rubber can be prevented by the fine groove. However, the corner is liable to tear due to the existence of the fine groove. Therefore, the slope is preferably formed.

In the blocks not provided with a fine groove, the slope 22 is preferably formed to prevent the occurrence of bareness of rubber in the narrowest corner.

If the angle βÀ is less than 30 degrees or more than 60 degrees, it is difficult to prevent the occurrence of bareness of rubber.

In Fig.4, the slope 22 is flat, but it can be curved in the vertical plane and/or horizontal plane.

It is also possible to form a fine groove 3 on every block.

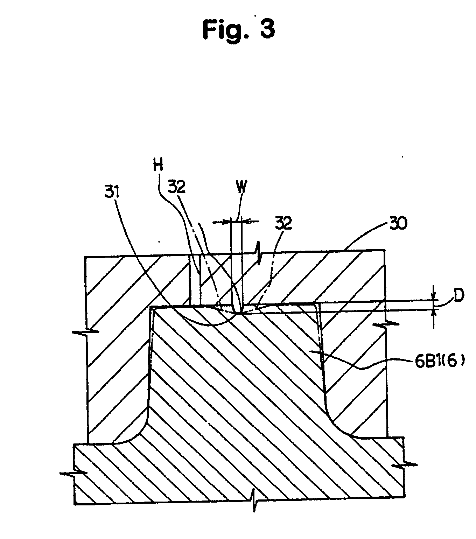

The fine grooves 3 are formed during the process of vulcanising a raw tyre in a mould 30. In the tyre mould 30, as shown in Fig.3, the tread rubber is pressed against small ribs 31 which correspond to the fine grooves 3 and which are formed on the inner surface of the mould 30. During pressing, although the rubber finally fits to the small rib 31, the rubber is first deformed by the small rib 31 as shown by a chain line, and air passages 32 are formed on both sides of the small rib 31, which allows air to flow away so bareness of rubber is prevented.

The depth D of the fine grooves 3 or the height the small ribs 31 is set in the range of from 0.2 to 0.7 mm, more preferably not less than 0.3 mm. If the depth D of the fine grooves 3 is less than 0.2 mm, the cross sectional area of the air passages 32 during shaping is too small, and the occurrence of bareness is not prevented. If the depth D is more than 0.7 mm, it affects pattern rigidity and the design of the tread pattern.

The width W of the fine grooves 3 or the small ribs 31 is 0.3 to 1.0 mm, more preferably not less than 0.6 mm. If the width W of the fine grooves 3 is less than 0.3 mm, the sectional area of the air passages 32 decreases, and it is difficult to fully prevent the occurrence of bareness of rubber. If the width W is more than 1.0 mm, the pattern rigidity is liable to decrease and as a result dry grip performance is liable to decrease.

### Comparison Test

Test tyres all having the same structure shown in Fig.1 and the same tread pattern shown in Fig.2 except for fine grooves were made and tested as follows.

### (1) Rubber bareness test

The test tyres were examined whether bareness of rubber occurred or not when the tyre mould was provided with four vent holes on every block.

### (2) Minimum vent hole test

The minimum number of vent holes per one block by which the occurrence of bareness of rubber could be completely prevented was obtained.

### (3) Appearance test

The appearance of test tyres were evaluated by testers' feeling. In Table 1, the results are indicated by an index based on the prior art tyre being 100. The larger the value, the better the appearance.

### (4) Dry grip test, Wet grip test and Noise test

A test car (3000cc FR passenger car) provided on all wheels with test tyres was run on a test course, and the maximum critical speed was measured under dry and wet conditions. Further, the running noise was evaluated by the driver's feeling. In Table 1, the results are indicated by an index based on the prior art tyre being 100. The larger the value, the better the performance.
- Tyre size:: 225/50R16
- Wheel Rim:: 16X7JJ standard rim
- Pressure:: 2.2kg/sq.cm (normal pressure)
- Tyre load:: 360kg
- Carcass:: two plies of 1100d nylon cords arranged at an angle of 90 degrees to the tyre equator and a cord count of 48/5cm (including one high turned-up ply)
- Belt:: a single ply of 1400d nylon cords wound spirally at almost zero degree to the tyre equator and a cord count of 49/5cm

### Longitudinal groove

- Width:: about 12 mm
- Depth:: about 8 mm

### Axial groove

- Width:: about 4 mm
- Depth:: about 7 mm

It was confirmed that the tyres according to the invention can be protected from the occurrence of bareness of rubber without increasing the number of vent holes and without decreasing tyre performance.

**Table 1**

| Tie | Ex.1 | Ex.2 | Ex.3 | Ex.4 | Ex.5 | Prior | Ref.1 | Ref.2 | Ref.3 | Ref.4 | Ref.5 | Ref.6 | Ref.7 |
|---|---|---|---|---|---|---|---|---|---|---|---|---|---|
| Fine groove | | | | | | | | | | | | | |
| Depth D *1 (mm) | 0.4 | 0.4 | 0.4 | 0.2 | 0.6 | - | 0.8 | 2 | 0.4 | 0.4 | 0.1 | 0.8 | -0.4 |
| Width W (mm) | 0.8 | 0.5 | 1 | 0.8 | 0.8 | - | 2 | 0.8 | 0.2 | 1.1 | 0.8 | 0.8 | 0.8 |

| Test resuls | | | | | | | | | | | | | |
|---|---|---|---|---|---|---|---|---|---|---|---|---|---|
| Bareness *2 | O | O | O | O | O | X | O | X | X | O | X | O | O |
| Vent holes | 4 | 4 | 4 | 4 | 4 | 6 | 4 | 6 | 5 | 4 | 5 | 4 | 4 |
| Appearance | 110 | 105 | 102 | 105 | 105 | 100 | 95 | 110 | 95 | 98 | 95 | 100 | 100 |
| Dry grip | 100 | 100 | 100 | 100 | 100 | 100 | 95 | 95 | 100 | 98 | 100 | 95 | 95 |
| Wet grip | 100 | 100 | 100 | 100 | 100 | 100 | 100 | 100 | 100 | 100 | 100 | 100 | 100 |
| Noise | 105 | 102 | 102 | 105 | 105 | 100 | 95 | 95 | 100 | 96 | 100 | 100 | 100 |

| | | | | | | | | | | | | | |
|---|---|---|---|---|---|---|---|---|---|---|---|---|---|
| *1) X= bareness of rubber occurred, O= not occurred. | | | | | | | | | | | | | |

The present invention can be suitably applied to various kinds of block pattern tyres, e.g. passenger car tyres, truck/bus tyres and the like.

## Claims

1. A pneumatic tyre comprising a tread portion (12) comprising blocks (6A1, 6B1, 6C1) each provided with a fine groove (3) for preventing bareness of rubber which has a depth of 0.2 to 0.7 mm and a width of 0.3 to 1.0 mm and extends from one of corners (7) of the block to an edge (5) of the block opposite the corner (7).

2. A pneumatic tyre according to claim 1, **characterised in that** said corner (7) from which the fine groove (3) extends is the angularly narrowest corner of the block, and said edge (5) extends substantially in the tyre circumferential direction.

3. A pneumatic tyre according to claim 2, **characterised in that** said angularly narrowest corner (7) is provided with a slope (22) having an angle β of from 30 to 60 degrees with respect of the normal direction of the tread surface.

4. A pneumatic tyre according to any of claims 1 to 3, **characterised in that** the tread portion (12) is divided into circumferential rows of blocks (6) and the blocks (6) in each row are said blocks (6A1, 6B1, 6C1) with the fine groves (3) and blocks without fine grooves alternating with said blocks (6A1, 6B1, 6C1).

5. A pneumatic tyre according to claims 1 or 3, **characterised in that** the tread portion (12) is divided into circumferential rows of blocks (6), the blocks (6) in each row are said blocks (6A1, 6B1, 6C1) with the fine grooves (3) and blocks without fine grooves alternating with said blocks (6A1, 6B1, 6C1), the blocks without fine grooves are each provided in the angularly narrowest corners with a slope having an angle of 30 to 60 degrees to the normal direction of the tread surface.

## Patentansprüche

1. Luftreifen, der einen Laufstreifenabschnitt (12) mit Blöcken (6A1, 6B1, 6C1) umfasst, die zur Verhinderung von Gummiknappheit jeweils mit einer feinen Rille (3) versehen sind, die eine Tiefe von 0,2 bis 0,7 mm und eine Breite von 0,3 bis 1,0 mm aufweist und sich von einer der Ecken (7) des Blocks zu einer der Ecke (7) gegenüberliegenden Kante (5) des Blocks erstreckt.

2. Luftreifen nach Anspruch 1, **dadurch gekennzeichnet, dass** die Ecke (7), von der die feine Rille (3) ausgeht, die spitzwinkligste Ecke des Blocks ist und die Kante (5) im Wesentlichen in Umfangsrichtung des Reifens verläuft.

3. Luftreifen nach Anspruch 2, **dadurch gekennzeichnet, dass** die im Winkel engste Ecke (7) mit einer Schräge (22) versehen ist, die einen Winkel β von 30 bis 60 Grad in Bezug auf die Richtung der Normalen der Lauffläche besitzt.

4. Luftreifen nach einem der Ansprüche 1 bis 3, **dadurch gekennzeichnet, dass** der Laufstreifenabschnitt (12) in Umfangsrichtung in Reihen von Blöcken (6) unterteilt ist, wobei die Blöcke (6) in jeder Reihe die Blöcke (6A1, 6B1, 6C1) mit den feinen Rillen (3) und Blöcke ohne feine Rillen, die sich mit den Blöcken (6A1, 6B1, 6C1) abwechseln, sind.

5. Luftreifen nach Anspruch 1 oder 3, **dadurch gekennzeichnet, dass** der Laufstreifenabschnitt (12) in Umfangsrichtung in Reihen von Blöcken (6) unterteilt ist, wobei die Blöcke (6) in jeder Reihe die Blöcke (6A1, 6B1, 6C1) mit den feinen Rillen (3) und Blöcke ohne feine Rillen, die sich mit den Blöcken (6A1, 6B1, 6C1) abwechseln, sind und die Blöcke ohne feine Rillen jeweils in den spitzwinkligsten Ecken mit einer Schräge versehen sind, die einen Winkel von 30 bis 60 Grad zur Richtung der Normalen der Lauffläche besitzt.

## Revendications

1. Pneumatique comprenant une partie de bande de roulement (12) qui possède des blocs (6A1, 6B1, 6C1) ayant chacun une gorge fine (3) destinée à empêcher le dénudage du caoutchouc, qui a une profondeur de 0,2 à 0,7 mm et une largeur de 0,3 à 1,0 mm et qui s'étend de l'un des coins (7) du bloc à un bord (5) du bloc opposé au coin (7).

2. Pneumatique selon la revendication 1, **caractérisé en ce que** le coin (7) à partir duquel la gorge fine (3) s'étend est le coin angulairement le plus étroit du bloc, et le bord (5) s'étend pratiquement dans la direction circonférentielle du pneumatique.

3. Pneumatique selon la revendication 2, **caractérisé en ce que** le coin angulairement le plus étroit (7) a une partie inclinée (22) d'angle β compris entre 30 et 60° par rapport à la direction normale de la surface de la bande de roulement.

4. Pneumatique selon l'une quelconque des revendications 1 à 3, **caractérisé en ce que** la partie de bande de roulement (12) est divisée en rangées circonférentielles de blocs (6), et les blocs (6) de chaque rangée sont des blocs (6A1, 6B1, 6C1) ayant des gorges fines (3) et des blocs sans gorge fine qui alternent avec les blocs (6A1, 6B1, 6C1).

5. Pneumatique selon la revendication 1 ou 3, **caractérisé en ce que** la partie de bande de roulement (12) est divisée en rangées circonférentielles de blocs (6), les blocs (6) de chaque rangée sont constitués par les blocs (6A1, 6B1, 6C1) ayant les gorges fines (3) et des blocs sans gorge fine qui alternent avec les blocs précédents (6A1, 6B1, 6C1), et les blocs sans gorge fine ont chacun, aux coins angulairement les plus étroits, une inclinaison formant un angle de 30 à 60° avec la direction normale de la surface de la bande de roulement.
